# EUROPEAN PATENT SPECIFICATION

(11) **EP 4 219 841 B1**
(45) Date of publication and mention of the grant of the patent: **29.04.2026**
(21) Application number: 23152021.4
(22) Date of filing: 17.01.2023
(51) Int. Cl.: E02F 9/08, E02F 9/22

(54) **WORK VEHICLE**
ARBEITSFAHRZEUG
VÉHICULE DE TRAVAIL

(30) Priority: 26.01.2022 JP 2022010017
(43) Date of publication of application: 02.08.2023
(73) Proprietor: Yanmar Holdings Co., Ltd., Osaka-shi, Osaka (JP)
(72) Inventor: MINEMATSU, Shunsuke, Fukuoka (JP); TSUJIMURA, Katsuyoshi, Fukuoka (JP); OTSU, Motoharu, Fukuoka (JP); OYAMADA, Yasuyuki, Fukuoka (JP); KOTANI, Daichi, Fukuoka (JP)
(74) Representative: Novagraaf International SA

(56) References cited:
- GB-A- 2 160 484
- JP-A- 2011 241 587
- JP-A- H05 187 401
- JP-B2- 4 737 985

## Description

### TECHNICAL FIELD

The present invention relates to a work vehicle.

### BACKGROUND ART

Conventionally, in a work vehicle such as a hydraulic excavator, an attempt has been made to make a piping structure around a hydraulic pump more compact, thereby to downsize the work vehicle (see, for example, Patent Document 1). Further, Patent Document 2 relates to a work vehicle such as a tractor that includes a first hydraulic pump that supplies hydraulic oil to a hydraulic lift device and a second hydraulic pump that supplies hydraulic oil to a power steering device.

### PRIOR ART DOCUMENT

### PATENT DOCUMENT

Patent Document 1: Japanese Unexamined Patent Application Publication No. 2010-185202
Patent Document 2: Japanese Patent Publication No. 4737985

### SUMMARY OF INVENTION

### TECHNICAL PROBLEM

For example, in a configuration where a hydraulic pump is placed in a position higher than a liquid level of a hydraulic oil in a hydraulic oil tank; when an engine is stopped, i.e., when the hydraulic pump stops driving, the hydraulic oil in the hydraulic pump may flow via a hydraulic hose to the hydraulic oil tank side, depending on how the hydraulic hose is arranged, thereby, as the case may be, emptying the inside of the hydraulic pump. In this case, when the engine is next revved thereby to start driving the hydraulic pump, the hydraulic pump is first idled (this phenomenon is also called "air bite"). The above idling of the hydraulic pump may cause damage to or failure of the hydraulic pump. Thus, in the past, the hydraulic pump had to be placed in a position lower than the liquid level of the hydraulic oil in the hydraulic oil tank, which restricted the positioning of the hydraulic pump.

The present invention has been made for solving the above issue; therefore, it is an object of the present invention to provide, by devising arrangement of a hydraulic hose, a work vehicle in which a hydraulic pump's damage or failure due to an idling of the hydraulic pump can be reduced even in a configuration where the hydraulic pump is placed in a position higher than a liquid level of a hydraulic oil in a hydraulic oil tank, thereby making it possible to increase a freedom degree in the setting of the hydraulic pump.

### SOLUTION TO PROBLEM

A work vehicle according to an aspect of the present invention includes: a hydraulic oil tank that tanks a hydraulic oil; a hydraulic pump connected via a first hydraulic hose to the hydraulic oil tank; and a hydraulic equipment connected via a second hydraulic hose to the hydraulic pump, wherein the hydraulic pump is placed in a position higher than a liquid level of the hydraulic oil in the hydraulic oil tank, and at least part of the second hydraulic hose is placed in a position lower than the liquid level.

### ADVANTAGEOUS EFFECTS OF INVENTION

With the above configuration, a hydraulic pump's damage or failure due to an idling of the hydraulic pump can be reduced even in a configuration where the hydraulic pump is placed in a position higher than a liquid level of a hydraulic oil in a hydraulic oil tank, thereby making it possible to increase a freedom degree in the setting of the hydraulic pump.

### BRIEF DESCRIPTION OF DRAWINGS

Fig. 1 is a side view showing a schematic configuration of a hydraulic excavator which is an example of a work vehicle according to an embodiment of the present invention.
Fig. 2 is a block diagram schematically showing a configuration of a hydraulic system of the hydraulic excavator.
Fig. 3 is a perspective view from the upper left back, showing a configuration of an interior of an engine chamber of an upper swing body provided for the hydraulic excavator.
Fig. 4 is a perspective view from the left back, showing the configuration of the interior of the engine chamber.
Fig. 5 is a back view showing the configuration of the interior of the engine chamber.
Fig. 6 is a plan view showing the configuration of the interior of the engine chamber.
Fig. 7 is a perspective view showing another configuration of the interior of the engine chamber.
Fig. 8 is a back view showing the other configuration of the interior of the engine chamber.

### DESCRIPTION OF EMBODIMENTS

The following is a description of an embodiment of the present invention based on the drawings.

### [1. Work Vehicle]

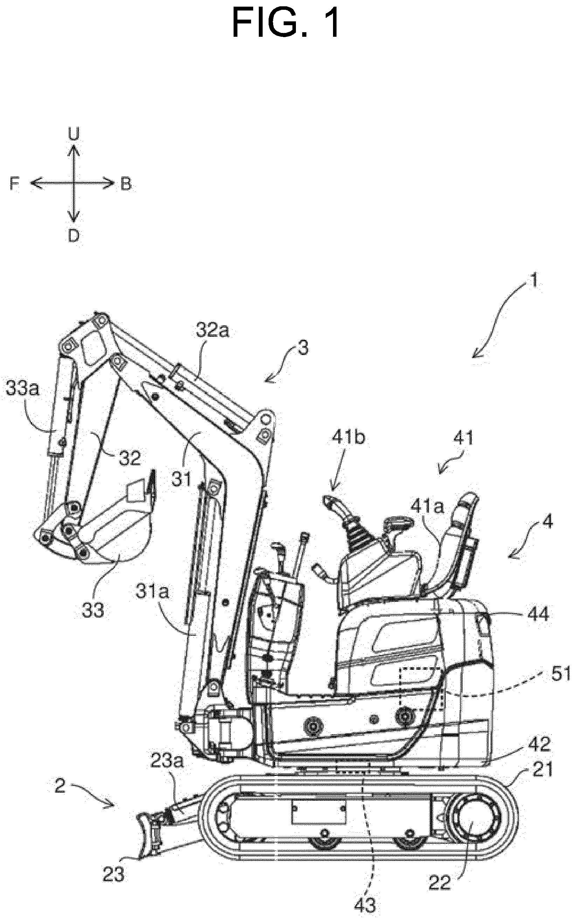

Fig. 1 is a side view showing a schematic configuration of a hydraulic excavator 1 which is an example of a work vehicle according to the present embodiment. The hydraulic excavator 1 includes a lower run body 2, a work instrument 3, and an upper swing body 4.

Here, directions are defined as follows. First, the direction in which the lower run body 2 linearly moves is a front/back direction, one side of which is "front" and another side is "back". In Fig. 1, a blade 23's side relative to a run motor 22 is shown as "front", as an example. Also, a transverse direction perpendicular to the front/back direction is defined as a right/left direction. In this case, the left side is "left" and the right side is "right" as viewed from an operator (manipulator, driver) seated on a drive seat 41a. Also, a gravity direction perpendicular to the front/back direction and the right/left direction is defined as the up/down direction, with the upstream side in the gravity direction being "up" and the downstream side in the gravity direction being "down". In the drawings, when necessary, forward is denoted by a symbol "F", backward by "B", rightward by "R", leftward by "L", upward by "U", and downward by "D".

The lower run body 2 is provided with a pair of right and left crawlers 21 and a pair of right and left run motors 22. Each of the run motors 22 is a hydraulic motor. The right and left run motors 22 drive the right and left crawlers 21, respectively, thereby making it possible to move the hydraulic excavator 1 forward and backward. The lower run body 2 is provided with the blade 23 for performing ground leveling work, and a blade cylinder 23a. The blade cylinder 23a is a hydraulic cylinder to rotate the blade 23 in the up/down direction.

The work instrument 3 has a boom 31, an arm 32, and a bucket 33. The boom 31, the arm 32, and the bucket 33 are independently driven, there to make it possible to perform excavating of earth and sand.

The boom 31 is rotated by a boom cylinder 31a. The boom cylinder 31a has a base end portion thereof supported by a front portion of the upper swing body 4, and is movable freely in an extendable and retractable manner. The arm 32 is rotated by an arm cylinder 32a. The arm cylinder 32a has a base end portion thereof supported by the boom 31, and is movable freely in an extendable and retractable manner. The bucket 33 is rotated by a bucket cylinder 33a. The bucket cylinder 33a has a base end portion thereof supported by the arm 32, and is movable freely in an extendable and retractable manner. The boom cylinder 31a, the arm cylinder 32a, and the bucket cylinder 33a each include a hydraulic cylinder.

In the upper swing body 4, a manipulating 41, a swing table 42, a swing motor 43, and an engine chamber 44 are placed. Driving of the swing motor 43 as a hydraulic motor swings the upper swing body 4 via a swing bearing (not shown).

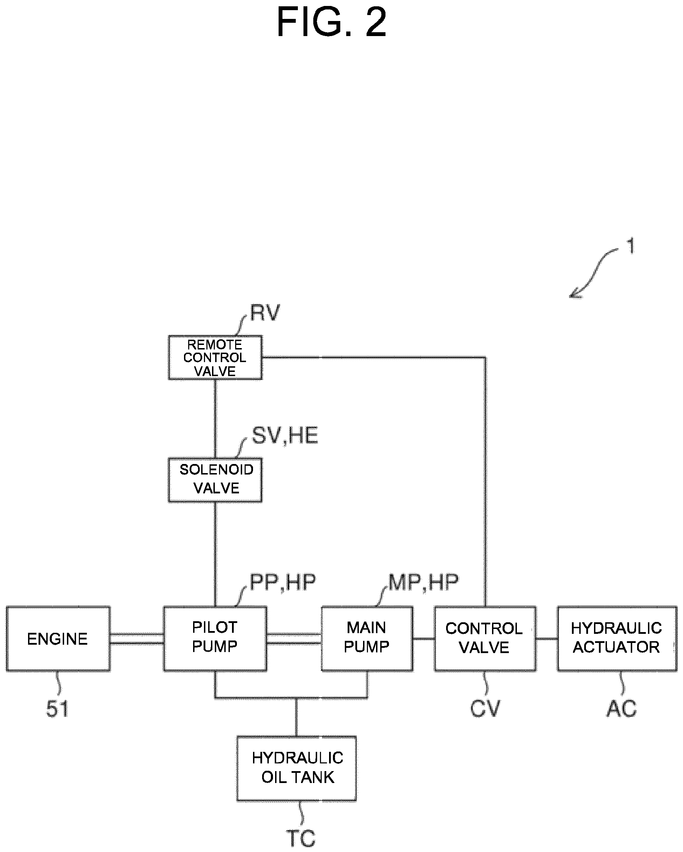

The manipulating 41 is placed at an upper portion of the swing table 42. A drive seat 41a is placed in the manipulating 41. An operation portion 41b is placed around the drive seat 41a. The operation portion 41b is so configured as to include an operation lever, a switch, a button, a pedal, or the like. The operator, by sitting on the drive seat 41a and operating the operation portion 41b, drives a hydraulic actuator AC (see Fig. 2). This allows the lower run body 2 to run and to switch run speed, the blade 23 to perform the ground leveling work, the work instrument 3 to perform the excavating work, and the upper swing body 4 to swing.

The engine chamber 44 is positioned in the back portion of the upper swing body 4. Inside the engine chamber 44, there is placed an engine 51 that provides power to various portions. The power of the engine 51 is supplied via a gear, a shaft, etc. to a pilot pump PP and a main pump MP which are shown in Fig. 2. Further, the pilot pump PP and the main pump MP are each an example of hydraulic pump HP.

### [2. Configuration of Hydraulic System]

Fig. 2 is a block diagram schematically showing a configuration of a hydraulic system of the hydraulic excavator 1. The hydraulic excavator 1 of the present embodiment is provided with a hydraulic oil tank TC, the main pump MP, a hydraulic actuator AC, a pilot pump PP, a control valve CV, a remote control valve RV, and a solenoid valve SV. Further, the solenoid valve SV is an example of hydraulic equipment HE.

The hydraulic oil tank TC tanks a hydraulic oil. The hydraulic oil tanked in the hydraulic oil tank TC is supplied via the control valve CV to the hydraulic actuator AC by driving of the main pump MP. This drives the hydraulic actuator AC. The hydraulic actuator AC includes the run motor 22, the swing motor 43, the boom cylinder 31a, the arm cylinder 32a, the bucket cylinder 33a, the blade cylinder 23a and the like described above.

The pilot pump PP discharges a pilot oil which serves as an input command to the control valve CV. The control valve CV is a direction-switching valve that controls the flow direction and flowrate of the hydraulic oil supplied from the main pump MP to the hydraulic actuator AC. The control valves CV are so provided as to correspond to the respective hydraulic actuators AC (hydraulic motor and hydraulic cylinder). The control valve CV may be placed in front of the drive seat 41a on which the operator sits, or may be placed below the drive seat 41a.

The remote control valve RV is provided so as to switch the direction and pressure of the pilot oil supplied from the pilot pump PP to the control valve CV. The remote control valve RV constitutes an operation lever, for example, of the operation portion 41b, and, in accordance with the operation direction and operation amount of the operation lever, reduces the pilot oil pressure (pilot pressure) supplied from the pilot pump PP thereby to generate a pilot secondary pressure.

The solenoid valve SV is positioned in an oil path between the pilot pump PP and the remote control valve RV, and turns on and off the pilot oil (hydraulic fluid)'s supplying from the pilot pump PP to the remote control valve RV. That is, the solenoid valve SV is an on-off valve that can switch, between on and off, the communication of the above oil path. Here, "on" refers to a state in which the communication of a predetermined amount or more of the hydraulic fluid is permitted. Further, the term "off" refers to a state in which the communication of the predetermined amount or more of the hydraulic fluid is not permitted. That is, the "on" of the communication includes a case other than a complete communication state. Similarly, the "off" of the communication includes a case other than a complete shutdown state of the communication.

The solenoid valve SV is switched on and off according to on and off of a cutoff switch (not shown). Further, the cutoff switch is a detection portion that detects the rotational position of a cutoff lever that constitutes the operation portion 41b.

### [3. Arrangement of Hydraulic Hose]

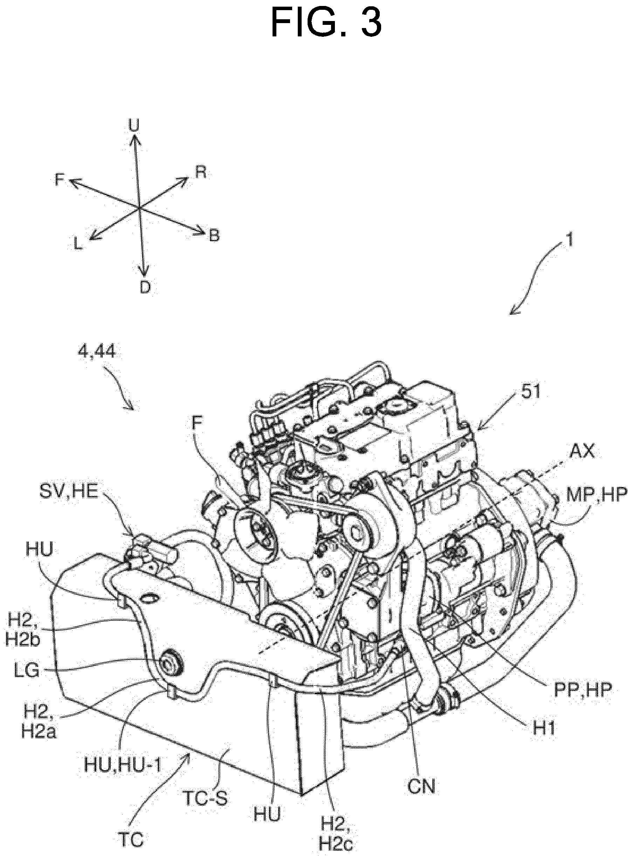

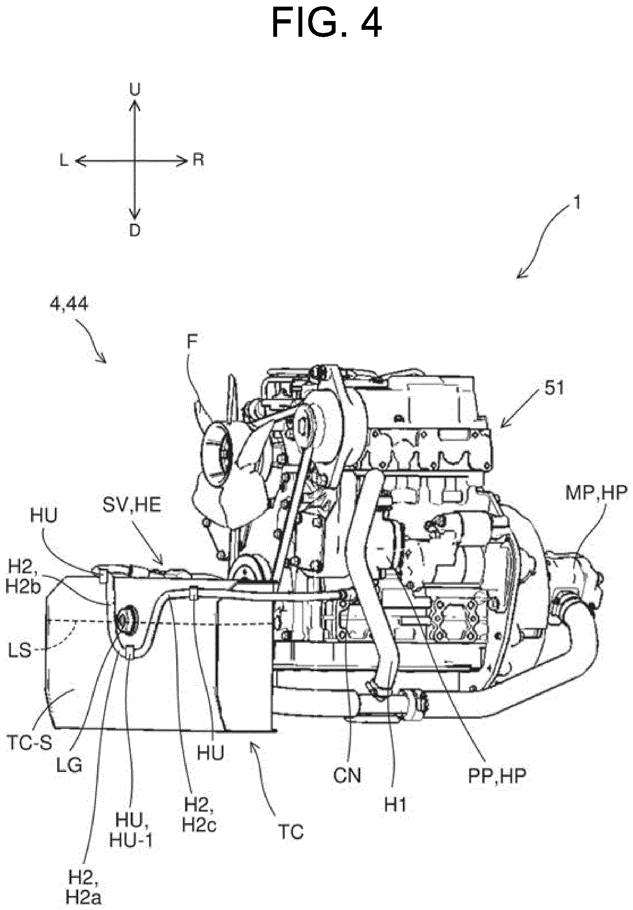

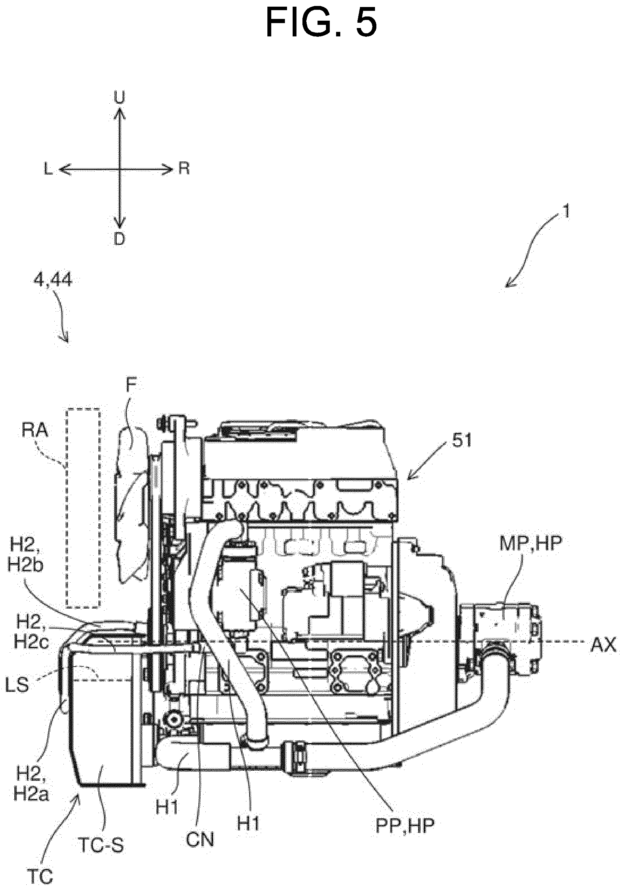

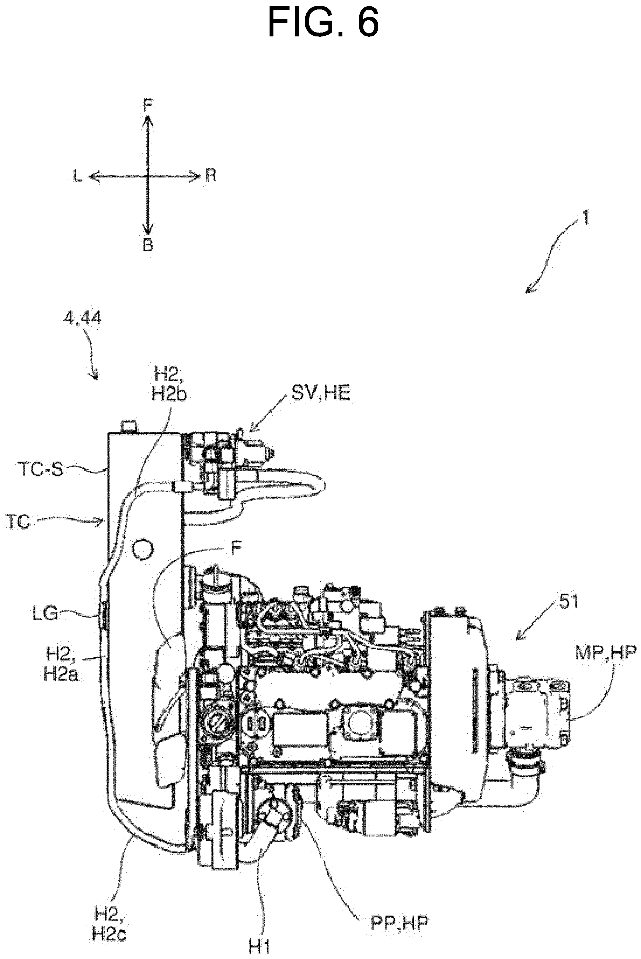

Fig. 3 is a perspective view from the upper left back, showing a configuration of an interior of the engine chamber 44 of the upper swing body 4. Fig. 4 is a perspective view from the left back, showing the configuration of the interior of the engine chamber 44. Fig. 5 is a back view showing the configuration of the interior of the engine chamber 44. Fig. 6 is a plan view showing the configuration of the interior of the engine chamber 44. As shown in these figures, the pilot pump PP, which is the hydraulic pump HP, is connected via a first hydraulic hose H1 to the hydraulic oil tank TC. Further, the above solenoid valve SV is connected via a second hydraulic hose H2 to the pilot pump PP.

In the present embodiment, as shown in Figs. 4 and 5, the pilot pump PP is placed in a position higher than a liquid level LS of the hydraulic oil in the hydraulic oil tank TC. And, a part of the second hydraulic hose H2 is placed in a position lower than the liquid level LS.

With this configuration; even when the driving of the engine 51 is stopped thereby to stop the driving of the pilot pump PP, a state of filling the pilot pump PP with the hydraulic oil can be kept. This is due to the fact that the hydraulic oil, in the second hydraulic hose H2, staying in a part lower than the liquid level LS prevents the hydraulic oil from flowing, in the second hydraulic hose H2, from the solenoid valve SV side via the pilot pump PP to the hydraulic oil tank TC. A more detailed description is as follows.

For example, when any of piping paths is opened to the atmosphere, the oil level in the piping is pushed by an atmospheric pressure to be lowered (i.e., hydraulic oil flows) to a height (= liquid level LS in the hydraulic oil tank TC) that is balanced with the pressure (= atmospheric pressure) on the hydraulic oil tank TC side. In an actual hydraulic piping, this "opened to the atmosphere" may occur, for example, to a drain piping present in the solenoid valve SV as the hydraulic equipment HE. Even if, due to the above opened-to-atmosphere, air enters the second hydraulic hose H2 from the hydraulic equipment HE side at the time of the engine 51 being stopped, a part of the second hydraulic hose H2 being placed in a position lower than the liquid level LS prevents the oil level of the hydraulic oil in the second hydraulic hose H2 from dropping to a position lower than the liquid level LS of the hydraulic oil tanked in the hydraulic oil tank TC. This prevents the hydraulic oil from flowing, in the second hydraulic hose H2, from the solenoid valve SV side via the pilot pump PP to the hydraulic oil tank TC, making it possible to keep the state of filling the pilot pump PP with the hydraulic oil.

This can reduce a situation where the pilot pump PP is first idled (air bite) when the engine 51 is next started thereby to start driving the pilot pump PP. As a result, the pilot pump PP's damage or failure due to the idling of the pilot pump PP can be reduced. Thus, the restriction of placing the pilot pump PP at or below the liquid level LS of the hydraulic oil in the hydraulic oil tank TC so as to reduce the pilot pump PP's damage or failure due to the idling of the pilot pump PP can be eliminated. As a result, the freedom degree of setting (layout) of the pilot pump PP can be increased.

In the present embodiment, the pilot pump PP and the second hydraulic hose H2 are connected via a connector CN, as shown in Figs. 3 to 5. The connector CN is formed in an L-shape, for example, and its entirety is in a position higher than the liquid level LS. This connector CN may be so shaped as to extend downward from the pilot pump PP to a position lower than the liquid level LS and to bend horizontally. Further, the solenoid valve SV as the hydraulic equipment HE may be placed in a position lower than the liquid level LS.

In this configuration, entirety of the second hydraulic hose H2 is placed in a position lower than the liquid level LS. Even with this configuration, when the driving of the pilot pump PP is stopped, the hydraulic oil stays in the second hydraulic hose H2 below the liquid level LS, preventing the hydraulic oil from flowing, in the second hydraulic hose H2, from the solenoid valve SV side via the pilot pump PP to the hydraulic oil tank TC. This can keep the state of filling the pilot pump PP with the hydraulic oil. Thus, the pilot pump PP's damage or failure due to the idling of the pilot pump PP can be reduced.

From the above, it can be said that, in the configuration where the pilot pump PP as the hydraulic pump HP is placed in a position higher than the liquid level LS, at least part of the second hydraulic hose H2 should be placed in a position lower than the liquid level LS.

The second hydraulic hose H2 has a middle portion H2a, a first connection portion H2b, and a second connection portion H2c. The middle portion H2a is a portion that is placed in a position lower than the liquid level LS in the hydraulic oil tank TC. The first connection portion H2b is placed between the middle portion H2a and the solenoid valve SV as the hydraulic equipment HE, and is placed at the height higher than or equal to the liquid level LS. The second connection portion H2c is placed between the middle portion H2a and the pilot pump PP as the hydraulic pump HP, and in placed at the height higher than or equal to the liquid level LS. Thus, of the middle portion H2a, the first connection portion H2b, and the second connection portion H2c, the middle portion H2a is positioned the lowest.

The above configuration of the second hydraulic hose H2 makes it possible to realize a layout in which the hydraulic equipment HE (solenoid valve SV), together with the hydraulic pump HP (pilot pump PP), is placed in a position higher than the liquid level LS.

In the layout where the hydraulic equipment HE (solenoid valve SV) is placed in a position higher than the liquid level LS; when the hydraulic pump HP (pilot pump PP) is stopped from driving, air, as the case may be, enters the second hydraulic hose H2 (especially, the first connection portion H2b) from the hydraulic equipment HE side, due to the above opened-to-atmosphere. However, even in this case; due to the above arrangement of the second hydraulic hose H2, the oil level of the hydraulic oil in the second hydraulic hose H2 does not drop a position lower than the liquid level LS of the hydraulic oil tanked in the hydraulic oil tank TC. Thus, even when the driving of the hydraulic pump HP is stopped, the hydraulic oil keeps staying in the second hydraulic hose H2's part (especially, the middle portion H2a) that is lower than the liquid level LS, making it possible to keep the state of filling the hydraulic pump HP with the hydraulic oil, and to prevent air from leaking into the hydraulic pump HP.

The second hydraulic hose H2 is arranged along an outer face TC-S of the hydraulic oil tank TC. Further, the outer face TC-S refers to an outer face of the hydraulic oil tank TC, i.e., a face that is in the hydraulic oil tank TC and that is opposite the inner surface in contact with the hydraulic oil.

In this case, maintainability of the second hydraulic hose H2 can be improved. That is, as long as a maintainer knows the position of the hydraulic oil tank TC, it is easier for the maintainer to find the second hydraulic hose H2, making it easier to perform maintenance such as replacement of the second hydraulic hose H2.

The above hydraulic oil tank TC has a level gauge LG. The level gauge LG is a viewing window for looking into the hydraulic oil in the hydraulic oil tank TC. The maintainer looks into the hydraulic oil tank TC via the level gauge LG, thereby to make it possible to check the amount of the hydraulic fluid in the hydraulic oil tank TC, i.e., the height of the liquid level LS of the hydraulic oil. In the present embodiment, the second hydraulic hose H2's part (e.g., the middle portion H2a) is placed in a position lower than the level gauge LG.

In the hydraulic oil tank TC, the liquid level LS is usually placed near the height of the level gauge LG. Thus, placing the second hydraulic hose H2's part (e.g., the middle portion H2a) in a position lower than the level gauge LG makes it easier to arrange the second hydraulic hose H2 such that the second hydraulic hose H2's part is placed in a position lower than the liquid level LS. That is, with the level gauge LG as a guide, the desired arrangement of the second hydraulic hose H2 is facilitated.

Entirety of the second hydraulic hoses H2 may be placed in a position lower than the level gauge LG. In this case, it is easier to arrange the second hydraulic hose H2 such that the entirety of the second hydraulic hoses H2 is placed in a position lower than the liquid level LS. From the above, it can be said that, in the present embodiment, it is sufficient that at least part of the second hydraulic hose H2 should be placed in a position lower than the level gauge LG.

As shown in Figs. 3 and 4, the hydraulic oil tank TC has a holding portion HU. The holding portion HU holds the second hydraulic hose H2. The above holding portion HU is fixed to the outer face TC-S of the hydraulic oil tank TC, and includes a hook to hook the second hydraulic hose H2. Further, the holding portion HU may include a clamp member that clamps the second hydraulic hose H2.

In the present embodiment, three holding portions HU are provided in the hydraulic oil tank TC, but the number of holding portions HU is not limited and may be one or two, or four or more. In Figs. 5 and 6, the holding portion HU is omitted for convenience.

The holding portion HU holds the second hydraulic hose H2 to the hydraulic oil tank TC (especially, the outer face TC-S), making it possible to compactly arrange the second hydraulic hose H2 around the hydraulic oil tank TC. That is, it is possible to prevent the second hydraulic hose H2 from being so arranged to be spread in the space around the hydraulic oil tank TC. It is also easier to keep at least part of the second hydraulic hose H2 positioned lower than the liquid level LS.

As shown in Figs. 3 to 6, the pilot pump PP, which is the hydraulic pump HP, is placed on the hydraulic oil tank TC's one side in the width direction, relative to the hydraulic oil tank TC. Here, the width direction of the hydraulic oil tank TC refers to the direction same as the right/left direction of the hydraulic excavator 1, for example. For example, the pilot pump PP is placed on the right side (inside a machine body) relative to the hydraulic oil tank TC.

This positional relation between the hydraulic pump HP and the hydraulic oil tank TC makes it possible to pull out the first hydraulic hose H1, which is connected to the hydraulic oil tank TC, from the hydraulic oil tank TC to one side in the width direction (e.g., right side) and to connect the first hydraulic hose H1 with the hydraulic pump HP. This allows for a compact arrangement of the first hydraulic hose H1.

The hydraulic equipment HE, as well as the pilot pump PP, is placed on the hydraulic oil tank TC's one side in the width direction, relative to the hydraulic oil tank TC. Specifically, the solenoid valve SV as the hydraulic equipment HE is placed on the right side relative to the hydraulic oil tank TC.

In the configuration where the hydraulic pump HP (pilot pump PP) and the hydraulic equipment HE (solenoid valve SV) are placed on the same side (e.g., right side) relative to the hydraulic oil tank TC, the placing space on the same side relative to the hydraulic oil tank TC is shared by the hydraulic pump HP and the hydraulic equipment HE, making it possible to realize an efficient placement of the hydraulic pump HP and the hydraulic equipment HE. This allows the hydraulic excavator 1's dimensions in the width direction (right/left direction) to be reduced compared to a configuration where, for example, the hydraulic pump HP and the hydraulic equipment HE are placed on sides opposite each other relative to the hydraulic oil tank TC. As a result, it is easy to downsize the hydraulic excavator 1.

In contrast, the above holding portion HU, in the hydraulic oil tank TC, is placed on the other side in the width direction. Specifically, the holding portion HU is placed to the left of the hydraulic oil tank TC (outside the machine body). This places the second hydraulic hose H2 outside of the hydraulic excavator 1 (on the hood side, not on the internal engine side). As a result, the second hydraulic hose H2 is easier to maintain.

As a result of the holding of the second hydraulic hose H2 by the holding portion HU placed in the above manner, the second hydraulic hose H2 is pulled around from the hydraulic pump HP (pilot pump PP) toward the hydraulic equipment HE (solenoid valve SV), from one side (e.g. right side) to the other side (e.g. left side), in the width direction, relative to the hydraulic oil tank TC, and then is pulled around from the other side to the one side. This can increase the distance between the hydraulic pump HP and the hydraulic equipment HE. Thus, even when the hydraulic pump HP vibrates at the time of driving the engine 51, the vibration of the hydraulic pump HP is less likely to be transmitted via the second hydraulic hose H2 to the hydraulic equipment HE. As a result, the hydraulic equipment HE is less likely to vibrate, also reducing the risk of failure of the hydraulic equipment HE. Thus, the durability and reliability of the hydraulic equipment HE can be improved.

As shown in Figs. 3 and 4, the holding portion HU includes a low holding portion HU-1 that is placed in a position lower than the level gauge LG. The low holding portion HU-1, by holding the second hydraulic hose H2, can reliably realize the configuration where at least part of the second hydraulic hose H2 is placed in a position lower than the level gauge LG. That is, it is possible to reliably realize the configuration where at least part of the second hydraulic hose H2 is placed in a position lower than the liquid level LS.

As shown in Figs. 3 and 5, the engine 51 provided for the hydraulic excavator 1 is placed on the hydraulic oil tank TC's one side (e.g., right side) in the width direction. Thus, in the width direction (right/left direction) of the hydraulic oil tank TC, the hydraulic pump HP and the engine 51 are placed on the same side relative to the hydraulic oil tank TC. However, the hydraulic pump HP is placed in a position different (displaced) from on a power axis AX of the engine 51. The power axis AX is a rotation axis (central axis) of a crankshaft of the engine 51.

Specifically, the pilot pump PP as the hydraulic pump HP is positioned diagonally backward and upward relative to the power axis AX. An input shaft of the pilot pump PP is connected with the power axis AX of the engine 51 via a power transmission mechanism such as a gear and a shaft. This transmits a drive force of the engine 51 via the above power transmission mechanism to the pilot pump PP.

As described above, in the configuration where the power axis AX of the engine 51 and the hydraulic pump HP are displaced on the hydraulic oil tank TC's one side in the width direction, the hydraulic oil tank TC, the engine 51, and the hydraulic pump HP can be reduced in the total dimension in the width direction, compared with a configuration where the engine 51 and the hydraulic pump HP are placed side by side along the power axis AX. This makes it possible to reduce the hydraulic excavator 1's transverse width (width in right/left direction) that corresponds to the above width direction, making it easier to downsize the hydraulic excavator 1.

Also, as shown in Figs. 3 and 6, the hydraulic pump HP (e.g., pilot pump PP) is placed behind the engine 51. With the above placing, the maintainer can easily access the hydraulic pump HP by opening a hood (not shown) which constitutes the back side wall of the engine chamber 44. This means that access to the hydraulic pump HP is not blocked by the engine 51. Thus, the maintainer can easily perform maintenance on the hydraulic pump HP.

As shown in Figs. 3 to 6, the hydraulic excavator 1 is provided with a fan F. The fan F is provided so as to cool a radiator RA shown in Fig. 5. The fan F rotates when the drive power output from the power axis AX of the engine 51 is transmitted via a pulley, a belt, and the like.

In the engine chamber 44, the radiator RA is positioned above the hydraulic oil tank TC. The fan F is placed between the radiator RA and the engine 51. Thus, the fan F is placed on the hydraulic oil tank TC side relative to the engine 51.

With the above arrangement of the fan F, the fan F can cool the radiator RA, and also can cool the hydraulic oil tank TC. That is, the fan F provided for cooling the radiator RA can also be used to cool the hydraulic oil tank TC. Thus, it is no longer necessary to provide a dedicated fan to cool the hydraulic oil tank TC, making it possible to simplify the configuration in the engine chamber 44.

As shown in Figs. 3 and 6, the above hydraulic equipment HE (e.g., solenoid valve SV) is placed in front of the engine 51. With the above arrangement of the hydraulic equipment HE, the hydraulic equipment HE, the engine 51, and the hydraulic pump HP can be placed in the front/back direction. This makes it easier to reduce the transverse width of the hydraulic excavator 1 smaller than in the configuration where the hydraulic equipment HE, the engine 51, and the hydraulic pump HP are placed in the right/left direction, for example.

### [4. Other Arrangement of Hydraulic Hose]

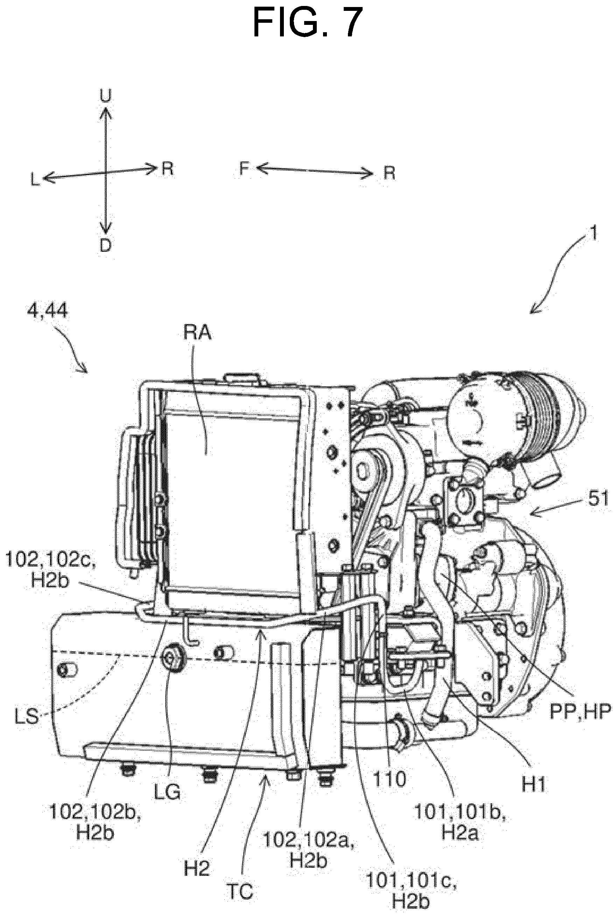

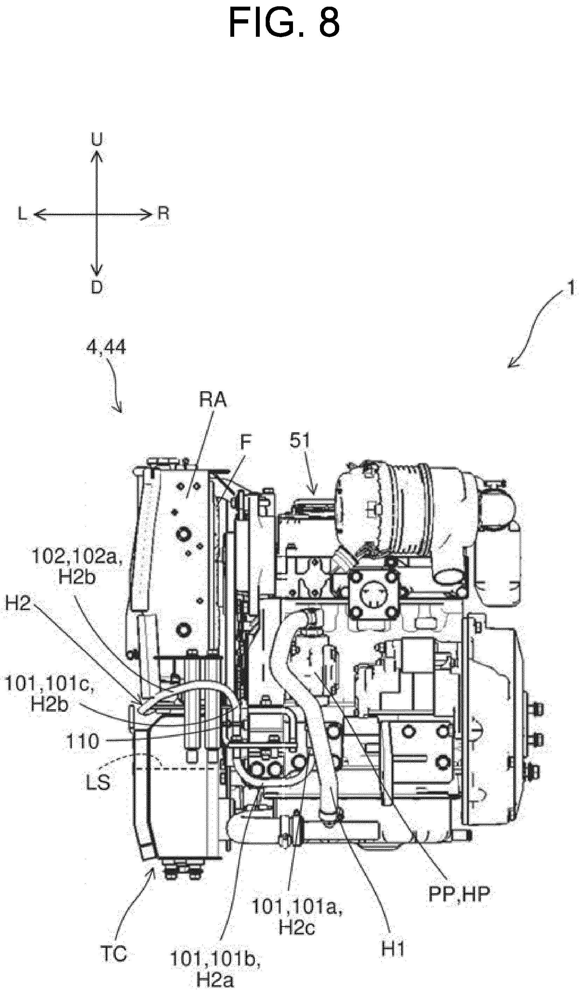

Fig. 7 is a perspective view from the upper left back, showing another configuration of the interior of the engine chamber 44 of the upper swing body 4. Fig. 8 is a back view showing the other configuration. The second hydraulic hose H2 connecting the solenoid valve SV (see Fig. 6, etc.) with the pilot pump PP may have plural bent portions. More specifically, the second hydraulic hose H2 may have a first bent portion 101 and a second bent portion 102 as a plurality of bent portions.

The first bent portion 101 has a shape that reciprocally bends in the first direction (e.g., up/down direction). Specifically, the first bent portion 101 has a first hose portion 101a (see Fig. 8), a second hose portion 101b, and a third hose portion 101c.

The second hose portion 101b is a portion that is placed in a position lower than the liquid level LS in the hydraulic oil tank TC. The first hose portion 101a is a portion that connects the pilot pump PP (hydraulic pump HP) with one end portion (right end portion) of the second hose portion 101b, and that is placed at the height higher than or equal to the liquid level LS. The third hose portion 101c is a portion that connects another end portion (left end portion) of the second hose portion 101b with the second bent portion 102 (especially, a fourth hose portion 102a described below), and that is placed at the height higher than or equal to the liquid level LS. That is, the first hose portion 101a extends from upward (the side connected with the pilot pump PP) to downward to be connected with the second hose portion 101b. Further, the third hose portion 101c extends from downward (the side connected with the second hose portion 101b) to upward thereby to be connected with the second bent portion 102. This constitutes the first bent portion 101 which reciprocally bends in the up/down direction. Further, the first hose portion 101a and the third hose portion 101c may or may not be parallel to each other (one may be tilted relative to the other). Further, the first hose portion 101a and the third hose portion 101c may be the same or different in length.

The second bent portion 102 is connected to the first bent portion 101 on the side opposite to the pilot pump PP in the right/left direction of the machine body. That is, the first bent portion 101 and the second bent portion 102 are provided in different positions (not so provided as to overlap excluding the connection portion).

The second bent portion 102 has a shape that reciprocally bends in a second direction (e.g., right/left direction) different from the above first direction. Specifically, the second bent portion 102 has a fourth hose portion 102a, a fifth hose portion 102b, and a sixth hose portion 102c, as shown in Fig. 7.

The fifth hose portion 102b is a portion that extends above the hydraulic oil tank TC from back to front. The fourth hose portion 102a extends leftward from the side connected with the first bent portion 101 (especially, the third hose portion 101c), and is connected with the back end of the fifth hose portion 102b. The fourth hose portion 102a is pressed downward in contact with a lower portion of the radiator RA. This stabilizes the arrangement of the second bent portion 102. The sixth hose portion 102c is connected with the front end of the fifth hose portion 102b, and extends rightward from the above front end, to be connected to the solenoid valve SV. This constitutes the second bent portion 102 which reciprocally bends in the right/left direction. Further, the fourth hose portion 102a and the sixth hose portion 102c may or may not be parallel to each other (one may be tilted relative to the other). Further, the fourth hose portion 102a and the sixth hose portion 102c may be the same or different in length.

The second bent portion 102 (fourth hose portion 102a, fifth hose portion 102b, sixth hose portion 102c) is placed in a position higher than the liquid level LS. Thus, in the configuration of the second hydraulic hose H2 in Figs. 7 and 8, the second hose portion 101b of the first bent portion 101 constitutes the middle portion H2a which is placed in a position lower than the liquid level LS. Further, the third hose portion 101c of the first bent portion 101 and the second bent portion 102 constitute the first connection portion H2b that is placed between the middle portion H2a and the hydraulic equipment HE (solenoid valve SV) and that is placed at the height higher than or equal to the liquid level LS. Further, the first hose portion 101a of the first bent portion 101 constitutes the second connection portion H2c that is placed between the middle portion H2a and the hydraulic pump HP (pilot pump PP), and that is placed at the height higher than or equal to the liquid level LS.

The hydraulic excavator 1 is further provided with a support portion 110. The support portion 110 is mounted to any frame or stay in the engine chamber 44, thereby to support the second hydraulic hose H2. For example, the support portion 110 supports the third hose portion 101c of the first bent portion 101. This stabilizes the arrangement of the second hydraulic hose H2. The support portion 110 may support only the first bent portion 101, as shown in Figs. 7 and 8, or only the second bent portion 102. Further, being provided for the respective first and second bent portions 101 and 102, the support portions 110 may support the first and second bent portions 101 and 102 at separate points. In any case, it is desirable that, from the viewpoint of stabilizing the arrangement of the second hydraulic hose H2, the support portion 110 should support at least any of the plural bent portions (first bent portion 101, second bent portion 102).

From the viewpoint of facilitating the arrangement of the second hydraulic hose H2 at least part of which is placed in a position lower than the liquid level LS, and stably supporting the second hydraulic hose H2 with a small number of support portions 110, it is desirable to reduce, in the second hydraulic hose H2, a load caused by bending. For this purpose, a configuration where the bending points of the second hydraulic hose H2 are distributed is preferable to a configuration where the bending point is concentrated. In this regard, it is desirable that the first bent portion 101 and the second bent portion 102 should be provided in different positions, as shown in Figs. 7 and 8.

Further, providing the first bent portion 101 and the second bent portion 102 in different positions makes it possible to place the support portion 110 that supports only the first bent portion 101 of the second hydraulic hose H2, as shown in Figs. 7 and 8. With the above placing of the support portion 110, the support portion 110 is placed on the right side of the hydraulic oil tank TC (inside of the engine chamber 44); thus, even if the hood placed on the left side of the hydraulic oil tank TC is removed, the support portion 110 is not visible from the hydraulic oil tank TC side (because of being hidden by the hydraulic oil tank TC). In this respect as well, the configuration where the first bent portion 101 and the second bent portion 102 are provided in different positions is desirable.

In the configuration where the support portion 110 supports the third hose portion 101c of the first bent portion 101; if the position of the support portion 110 is too low, the portion downstream from a support point of the third hose portion 101c (especially, the fourth hose portion 102a of the second bent portion 102) becomes unstable. As a result, the fourth hose portion 102a is more likely to get out of control. Meanwhile, if the support portion 110 is positioned too high, a large bending stress is applied to the connection point between the third hose portion 101c and the fourth hose portion 102a. As a result, it is difficult to guide the fourth hose portion 102a from the above support point to between the hydraulic oil tank TC and radiator RA. Thus, it is desirable that the support portion 110 should support the middle position of the third hose portion 101c (at or above the liquid level LS) in the first direction (up/down direction).

In the above, the case where the first direction is up/down and the second direction is right/left (width direction) has been described, but the first direction may be right/left and the second direction may be up/down. Further, any of the first direction and the second direction may be the front/back.

In the above, the second hydraulic hose H2 has been described as having the first bent portion 101 and the second bent portion 102 as plural bent portions, but the second hydraulic hose H2 may have three or more bent portions. Then, it is sufficient that the direction of reciprocally bending should be different in at least two of the three or more bent portions.

### [5. Others]

In the present embodiment, the pilot pump PP is used as the example of the hydraulic pump HP that is placed in a position higher than the liquid level LS of the hydraulic oil in the hydraulic oil tank TC, but the main pump MP can also be considered in the same way. That is, in the configuration where the main pump MP is placed in a position higher than the liquid level LS of the hydraulic oil in the hydraulic oil tank TC, and the main pump MP is connected with the hydraulic equipment HE (e.g., control valve CV) via the second hydraulic hose H2, placing at least part of the second hydraulic hose H2 in a position lower than the liquid level LS can reduce the main pump MP's damage or failure due to the idling of the main pump MP. Thus, the main pump MP can be placed without the restriction of being placed at or below the liquid level LS, making it possible to increase the freedom degree in the setting of the main pump MP.

In the present embodiment, the solenoid valve SV is used as the example of the hydraulic equipment HE, but any device that controls the hydraulic pressure is acceptable, and is not limited to the solenoid valve SV. For example, the control valve CV described above can also constitute the hydraulic equipment HE.

The hydraulic excavator 1 may be so configured as to drive the hydraulic pump HP by using an electric motor instead of the engine 51.

In the present embodiment, the support portion 110 (see Fig. 7) supports the second hydraulic hose H2 by being fixed to the stay or the like in the engine chamber 44, rather than to the hydraulic oil tank TC; in this respect it is distinguishable in wording from the holding portion HU (see Fig. 4) that is fixed to the hydraulic oil tank TC. However, both the support portion 110 and the holding portion HU share the same function in that they both "support" the second hydraulic hose H2. Further, the support portion 110 may be so configured that one end thereof is fixed to the hydraulic oil tank TC, and the other end thereof extends to the right of the machine body thereby to support the second hydraulic hose H2. Thus, it is possible to replace the support portion 110 in Fig. 7 with the holding portion HU fixed to the hydraulic oil tank TC, and conversely, to replace the holding portion HU in Fig. 4 with the support portion fixed to the stay or the like.

### INDUSTRIAL APPLICABILITY

The present invention is applicable to a work vehicle such as a construction machine and an agricultural machine, for example.

### REFERENCE SIGNS LIST

1 hydraulic excavator (work vehicle)
51 engine
101 first bent portion
102 second bent portion
110 support portion
AX power axis
F fan
H1 first hydraulic hose
H2 second hydraulic hose
H2a middle portion
H2b first connection portion
H2c second connection portion
HE hydraulic equipment
HP hydraulic pump
HU holding portion
HU-1 low holding portion
LG level gauge
LS liquid level
MP main pump (hydraulic pump)
PP pilot pump (hydraulic pump)
SV solenoid valve (hydraulic equipment)
TC hydraulic oil tank
TC-S outer face

## Claims

1. A work vehicle (1) comprising:
a hydraulic oil tank (TC) that tanks a hydraulic oil;
a hydraulic pump (HP) connected via a first hydraulic hose (H1) to the hydraulic oil tank (TC); and
a hydraulic equipment (HE) connected via a second hydraulic hose (H2) to the hydraulic pump (HP),
**characterized in that**
the hydraulic pump (HP) is placed in a position higher than a liquid level (LS) of the hydraulic oil in the hydraulic oil tank (TC), and
part of the second hydraulic hose (H2) is placed in a position lower than the liquid level (LS).

2. The work vehicle (1) according to claim 1, wherein the second hydraulic hose (H2) has:
a middle portion (H2a) placed in a position lower than the liquid level (LS),
a first connection portion (H2b) that is placed between the middle portion (H2a) and the hydraulic equipment (HE), and that is placed at a height higher than or equal to the liquid level (LS), and
a second connection portion (H2c) that is placed between the middle portion (H2a) and the hydraulic pump (HP), and that is placed at a height higher than or equal to the liquid level (LS).

3. The work vehicle (1) according to claim 1, wherein the second hydraulic hose (H2) has plural bent portions (101, 102), the plural bent portions (101, 102) have:
a first bent portion (101) that reciprocally bends in a first direction, and
a second bent portion (102) that reciprocally bends in a second direction different from the first direction, and
the first bent portion (101) and the second bent portion (102) are provided at different positions.

4. The work vehicle (1) according to claim 3, further including:
a support portion (110) that supports the second hydraulic hose (H2),
wherein
the support portion (110) supports at least any of the plural bent portions (101, 102).

5. The work vehicle (1) according to claim 1, wherein the hydraulic equipment (HE) is placed in a position higher than the liquid level (LS).

6. The work vehicle (1) according to claim 1, wherein the second hydraulic hose (H2) is placed along an outer face of the hydraulic oil tank (TC).

7. The work vehicle according to claim 1, wherein the hydraulic oil tank (TC) has a level gauge (LG), and
at least part of the second hydraulic hose (H2) is placed in a position lower than the level gauge (LG).

8. The work vehicle (1) according to claim 7, wherein the hydraulic oil tank (TC) has a holding portion (HU) that holds the second hydraulic hose (H2).

9. The work vehicle (1) according to claim 8, wherein the hydraulic pump (HP) is placed on the hydraulic oil tank's one side in a width direction, relative to the hydraulic oil tank (TC).

10. The work vehicle (1) according to claim 9, wherein the hydraulic equipment (HE) is placed on the one side in the width direction, relative to the hydraulic oil tank (TC).

11. The work vehicle (1) according to claim 9, wherein the holding portion (HU), in the hydraulic oil tank (TC), is placed on another side in the width direction.

12. The work vehicle (1) according to claim 8, wherein the holding portion (HU) includes a low holding portion that is placed in a position lower than the level gauge (LG).

## Patentansprüche

1. Arbeitsfahrzeug (1), umfassend:
einen Hydraulikölbehälter (TC), der ein Hydrauliköl speichert;
eine Hydraulikpumpe (HP), die über einen ersten Hydraulikschlauch (H1) mit dem Hydraulikölbehälter (TC) verbunden ist; und
eine hydraulische Ausrüstung (HE), die über einen zweiten Hydraulikschlauch (H2) mit der Hydraulikpumpe (HP) verbunden ist,
**dadurch gekennzeichnet, dass**
die Hydraulikpumpe (HP) in einer Position höher als ein Flüssigkeitsniveau (LS) des Hydrauliköls in dem Hydraulikölbehälter (TC) angeordnet ist, und
zumindest ein Teil des zweiten Hydraulikschlauchs (H2) in einer Position niedriger als das Flüssigkeitsniveau (LS) angeordnet ist.

2. Arbeitsfahrzeug (1) nach Anspruch 1, wobei der zweite Hydraulikschlauch (H2) aufweist:
einen mittleren Abschnitt (H2a), der in einer Position niedriger als das Flüssigkeitsniveau (LS) angeordnet ist,
einen ersten Verbindungsabschnitt (H2b), der zwischen dem mittleren Abschnitt (H2a) und der hydraulischen Ausrüstung (HE) angeordnet ist und der in einer Höhe höher als oder gleich dem Flüssigkeitsniveau (LS) angeordnet ist, und
einen zweiten Verbindungsabschnitt (H2c), der zwischen dem mittleren Abschnitt (H2a) und der Hydraulikpumpe (HP) angeordnet ist und der in einer Höhe höher als oder gleich dem Flüssigkeitsniveau (LS) angeordnet ist.

3. Arbeitsfahrzeug (1) nach Anspruch 1, wobei der zweite Hydraulikschlauch (H2) mehrere gebogene Abschnitte (101, 102) aufweist, wobei die mehreren gebogenen Abschnitte (101, 102) aufweisen:
einen ersten gebogenen Abschnitt (101), der sich wechselweise in einer ersten Richtung biegt, und
einen zweiten gebogenen Abschnitt (102), der sich wechselweise in einer zweiten Richtung biegt, die sich von der ersten Richtung unterscheidet, und
der erste gebogene Abschnitt (101) und der zweite gebogene Abschnitt (102) an unterschiedlichen Positionen vorgesehen sind.

4. Arbeitsfahrzeug (1) nach Anspruch 3, ferner umfassend:
einen Stützabschnitt (110), der den zweiten Hydraulikschlauch (H2) stützt,
wobei
der Stützabschnitt (110) zumindest einen der mehreren gebogenen Abschnitte (101, 102) stützt.

5. Arbeitsfahrzeug (1) nach Anspruch 1, wobei die hydraulische Ausrüstung (HE) in einer Position höher als das Flüssigkeitsniveau (LS) angeordnet ist.

6. Arbeitsfahrzeug (1) nach Anspruch 1, wobei der zweite Hydraulikschlauch (H2) entlang einer Außenfläche des Hydraulikölbehälters (TC) angeordnet ist.

7. Arbeitsfahrzeug nach Anspruch 1, wobei der Hydraulikölbehälter (TC) einen Füllstandsanzeiger (LG) aufweist, und
zumindest ein Teil des zweiten Hydraulikschlauchs (H2) in einer Position niedriger als der Füllstandsanzeiger (LG) angeordnet ist.

8. Arbeitsfahrzeug (1) nach Anspruch 7, wobei der Hydraulikölbehälter (TC) einen Halteabschnitt (HU) aufweist, der den zweiten Hydraulikschlauch (H2) hält.

9. Arbeitsfahrzeug (1) nach Anspruch 8, wobei die Hydraulikpumpe (HP) auf einer Seite des Hydraulikölbehälters (TC) in einer Breitenrichtung in Bezug auf den Hydraulikölbehälter (TC) angeordnet ist.

10. Arbeitsfahrzeug (1) nach Anspruch 9, wobei die hydraulische Ausrüstung (HE) auf derselben Seite in der Breitenrichtung in Bezug auf den Hydraulikölbehälter (TC) angeordnet ist.

11. Arbeitsfahrzeug (1) nach Anspruch 9, wobei der Halteabschnitt (HU) in dem Hydraulikölbehälter (TC) auf einer anderen Seite in der Breitenrichtung angeordnet ist.

12. Arbeitsfahrzeug (1) nach Anspruch 8, wobei der Halteabschnitt (HU) einen niedrigen Halteabschnitt umfasst, der in einer Position niedriger als der Füllstandsanzeiger (LG) angeordnet ist.

## Revendications

1. Véhicule de travail (1) comprenant :
une réserve d'huile hydraulique (TC) qui stocke une huile hydraulique ;
une pompe hydraulique (HP) raccordée via un premier flexible hydraulique (H1) à la réserve d'huile hydraulique (TC) ; et
un équipement hydraulique (HE) raccordé via un second flexible hydraulique (H2) à la pompe hydraulique (HP),
**caractérisé en ce que**
la pompe hydraulique (HP) est placée dans une position plus haute qu'un niveau de liquide (LS) de l'huile hydraulique dans la réserve d'huile hydraulique (TC), et
au moins une partie du second flexible hydraulique (H2) est placée dans une position plus basse que le niveau de liquide (LS).

2. Véhicule de travail (1) selon la revendication 1, dans lequel le second flexible hydraulique (H2) comporte :
une portion médiane (H2a) placée dans une position plus basse que le niveau de liquide (LS),
une première portion de raccordement (H2b) qui est placée entre la portion médiane (H2a) et l'équipement hydraulique (HE), et qui est placée à une hauteur supérieure ou égale au niveau de liquide (LS), et
une seconde portion de raccordement (H2c) qui est placée entre la portion médiane (H2a) et la pompe hydraulique (HP), et qui est placée à une hauteur supérieure ou égale au niveau de liquide (LS).

3. Véhicule de travail (1) selon la revendication 1, dans lequel le second flexible hydraulique (H2) comporte plusieurs portions coudées (101, 102), les plusieurs portions coudées (101, 102) comportant :
une première portion coudée (101) qui se courbe de manière alternée dans une première direction, et
une seconde portion coudée (102) qui se courbe de manière alternée dans une seconde direction différente de la première direction, et
la première portion coudée (101) et la seconde portion coudée (102) étant disposées à des positions différentes.

4. Véhicule de travail (1) selon la revendication 3, comprenant en outre :
une portion de support (110) qui supporte le second flexible hydraulique (H2),
dans lequel
la portion de support (110) supporte au moins l'une des plusieurs portions coudées (101, 102).

5. Véhicule de travail (1) selon la revendication 1, dans lequel l'équipement hydraulique (HE) est placé dans une position plus haute que le niveau de liquide (LS).

6. Véhicule de travail (1) selon la revendication 1, dans lequel le second flexible hydraulique (H2) est placé le long d'une face extérieure de la réserve d'huile hydraulique (TC).

7. Véhicule de travail selon la revendication 1, dans lequel la réserve d'huile hydraulique (TC) comporte une jauge de niveau (LG), et
au moins une partie du second flexible hydraulique (H2) est placée dans une position plus basse que la jauge de niveau (LG).

8. Véhicule de travail (1) selon la revendication 7, dans lequel la réserve d'huile hydraulique (TC) comporte une portion de maintien (HU) qui maintient le second flexible hydraulique (H2).

9. Véhicule de travail (1) selon la revendication 8, dans lequel la pompe hydraulique (HP) est placée d'un côté de la réserve d'huile hydraulique (TC) dans une direction de largeur, par rapport à la réserve d'huile hydraulique (TC).

10. Véhicule de travail (1) selon la revendication 9, dans lequel l'équipement hydraulique (HE) est placé du même côté dans la direction de largeur, par rapport à la réserve d'huile hydraulique (TC).

11. Véhicule de travail (1) selon la revendication 9, dans lequel la portion de maintien (HU), dans la réserve d'huile hydraulique (TC), est placée d'un autre côté dans la direction de largeur.

12. Véhicule de travail (1) selon la revendication 8, dans lequel la portion de maintien (HU) comprend une portion de maintien basse qui est placée dans une position plus basse que la jauge de niveau (LG).
